(19) **Europäisches Patentamt / European Patent Office / Office européen des brevets**

(11) **EP 4 328 250 A1**

(12) **EUROPEAN PATENT APPLICATION**
published in accordance with Art. 153(4) EPC

(43) Date of publication:
28.02.2024 Bulletin 2024/09

(21) Application number: 22791463.7

(22) Date of filing: 24.03.2022

(51) International Patent Classification (IPC):
$C08F\ 279/02^{(2006.01)}$      $C08L\ 25/04^{(2006.01)}$
$C08L\ 25/10^{(2006.01)}$      $C08K\ 3/26^{(2006.01)}$

(52) Cooperative Patent Classification (CPC):
C08F 279/02; C08K 3/26; C08L 25/04; C08L 25/10

(86) International application number:
PCT/JP2022/013769

(87) International publication number:
WO 2022/224686 (27.10.2022 Gazette 2022/43)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 20.04.2021 JP 2021070832

(71) Applicant: Denka Company Limited
Tokyo 103-8338 (JP)

(72) Inventors:
• KAMIMAKI, Eri
  Tokyo 103-8338 (JP)
• MOTOI, Daisuke
  Tokyo 103-8338 (JP)
• KOBAYASHI, Hirotaka
  Tokyo 103-8338 (JP)

(74) Representative: Murgitroyd & Company
Murgitroyd House
165-169 Scotland Street
Glasgow G5 8PL (GB)

(54) **RESIN COMPOSITION AND MOLDED ARTICLE**

(57) [Problem] To provide a resin composition that has a low styrene-based resin content and that has little impact on the environment, wherein the resin composition has good moldability and yields molded articles having excellent tensile moduli and tensile elongations at break; and a molded article composed of the resin composition.

[Solution] A resin composition containing an inorganic filler containing calcium carbonate and a styrene-based resin containing a diene component, wherein the inorganic filler content is 50 mass% or more relative to the overall mass of the resin composition, and as measured in accordance with ASTM-D638, the tensile modulus is 1,000-3,000 MPa, and the tensile elongation at break is 5% or higher.

EP 4 328 250 A1

## Description

### TECHNICAL FIELD

The present invention relates to a resin composition and a molded article composed thereof. More specifically, the present invention relates to a resin composition that has a low styrene-based resin content and that has little impact on the environment, and a molded article composed of said resin composition.

### BACKGROUND

Generally, the resin products that are used in household appliances, interior trimmings in automobiles, toys, etc. are molded by injection molding, etc. Polystyrene resins are typical thermoplastic resins that have excellent transparency and moldability, and that are inexpensive. Therefore, they are widely applied to the respective uses mentioned above as thermoplastic resins for injection molding. Among these various uses, in fields requiring physical properties such as heat resistance and rigidity, the practice of blending inorganic filler materials such as calcium carbonate, talc, zeolite, etc. into polystyrene resins is known (for example, Patent Document 1, etc.). However, polystyrene resins are very brittle. Therefore, molded articles obtained from resin compositions containing large quantities of inorganic filler materials have the problem that the tensile moduli and the tensile elongations at break are insufficient. Additionally, such resin compositions have low flowability, which is necessary for injection molding.

Meanwhile, in recent years, increasing importance has been placed on environmental issues such as global warming, and it is desirable to reduce the used amounts of resin materials derived from fossil resources such as petroleum. In the field of injection-molded articles also, resin products with a low percentage of thermoplastic resins derived from fossil resources are desired. Thus, methods of increasing the blended amounts of additives, such as inorganic fillers, not derived from fossil resources (Patent Document 2), resin compositions in which biomass-derived materials are blended (Patent Document 3), etc. have been considered. However, as mentioned above, in resin compositions containing polystyrene resins, if the blended amounts of inorganic filler materials are increased, the resins become brittle, the tensile moduli and the tensile elongations at break of the molded articles become lower, and the moldability also becomes worse. The situation is similar in the case in which biomass materials are blended. When the blending rate of biomass materials is made higher, the physical properties required of the injection-molded articles cannot be satisfied. For this reason, with conventional technologies, it is difficult to obtain a resin composition having little environmental impact in which the percentage of styrene-based resins has been reduced to 50 mass% or less.

### CITATION LIST

### PATENT LITERATURE

Patent Document 1: JP H9-267350 A

Patent Document 2: JP 2019-077148 A

Patent Document 3: JP 2018-119048 A

### SUMMARY OF INVENTION

### TECHNICAL PROBLEM

The present invention was made in consideration of the above-mentioned circumstances, and an objective of the present invention is to provide a resin composition that has a low styrene-based resin content and that has little impact on the environment, wherein the resin composition has good moldability and yields molded articles having excellent tensile moduli and tensile elongations at break. Another objective is to provide a molded article composed of such a resin composition.

### SOLUTION TO PROBLEM

The present inventors diligently studied the above-mentioned problem, and as a result, discovered that a resin composition capable of solving all of the above-mentioned problems can be obtained by combining a styrene-based resin containing a diene component with an inorganic filler containing calcium carbonate, thereby completing the present invention.

That is, the present invention has the embodiments indicated below.

[1] A resin composition containing an inorganic filler containing calcium carbonate and a styrene-based resin containing a diene component, wherein the inorganic filler content is 50 mass% or more relative to the overall mass of the resin composition, and as measured in accordance with ASTM-D638, the tensile modulus is 1,000-3,000 MPa, and the tensile elongation at break is 5% or higher.

[2] The resin composition according to [1], wherein the inorganic filler contains an egg shell powder.

[3] The resin composition according to [2], wherein an average grain size of the egg shell powder is 3-50 μm.

[4] The resin composition according to any one of [1] to [3], wherein the styrene-based resin contains a polystyrene resin and a styrene-based thermoplastic elastomer.

[5] The resin composition according to [4], wherein the polystyrene resin contains at least one resin selected from among general-purpose polystyrene and high-impact polystyrene.

[6] The resin composition according to [4] or [5], wherein the styrene-based thermoplastic elastomer contains a styrene-butadiene copolymer.

[7] The resin composition according to any one of [1] to [6], wherein the diene component content relative to the overall mass of the resin composition is 3-15 mass%.

[8] The resin composition according to any one of [1] to [7], wherein the MFR (200 °C, 5 kg load) of the resin composition is 1.5 g/10 min or higher.

[9] The resin composition according to any one of [1] to [8], wherein the resin composition is for injection molding.

[10] A molded article containing the resin composition according to any one of [1] to [9].

## EFFECTS OF INVENTION

The present invention can provide a resin composition that has a low styrene-based resin content and that has little impact on the environment, wherein the resin composition has good moldability and yields molded articles having excellent tensile moduli and tensile elongations at break; and a molded article composed of the resin composition.

## DESCRIPTION OF EMBODIMENTS

Hereinafter, the present invention will be explained in detail. However, the present invention is not limited to the embodiments below. In the present specification, the "-" (dash) symbol means "equal to or more than ... and equal to or less than ...". That is, "3-50" means "equal to or more than 3 and equal to or less than 50".

[Resin composition]

The resin composition according to the present invention is a resin composition containing an inorganic filler containing calcium carbonate and a styrene-based resin containing a diene component, characterized in that the inorganic filler content is 50 mass% or more relative to the overall mass of the resin composition, and as measured in accordance with ASTM-D638, the tensile modulus is 1,000-3,000 MPa, and the tensile elongation at break is 5% or higher. According to the resin composition of the present invention, the styrene-based resin content can be lowered while achieving moldability suitable for injection molding. Furthermore, molded articles having excellent tensile moduli and tensile elongations at break can be provided.

The resin composition according to the present invention has a tensile modulus, measured in accordance with ASTM-D638, of 1,000-3,000 MPa. In the present specification, the "tensile modulus of the resin composition" and the "tensile elongation at break of the resin composition" refer to values obtained by preparing resin composition test pieces in accordance with ASTM-D638, and using the test pieces to measure the tensile moduli and the tensile elongations at break. If the tensile moduli of the test pieces are 1,000-3,000 MPa, the molded articles obtained from the resin composition will also have a good tensile moduli, and molded articles having an excellent balance of strength and flexibility can be obtained.

The tensile modulus may be 1,000-2,600 MPa, 1,000-1,900 MPa, or 1,200-1,800 MPa. The aforementioned tensile modulus refers to a value measured in accordance with ASTM-D638, specifically to a value measured under the conditions indicated below.

(Tensile modulus measurement method)

After molding a resin composition into sheets having a thickness of 0.40 mm, ten measurement samples are prepared by being cut out in the shape of dumbbell no. 1. Thereafter, in accordance with ASTM-D638, the tensile moduli of the measurement samples are measured at a pulling rate of 5 mm/min under conditions with a measurement temperature of 23 °C and a humidity of 50%, using an autoclave. The tensile moduli of all of the measurement samples are measured and the average value thereof is defined as the tensile modulus of the resin composition.

Additionally, the resin composition according to the present invention has a tensile elongation at break, measured in accordance with ASTM-D638, of 5% or higher. If the tensile elongation at break of the resin composition is 5% or higher, the molded articles that are obtained will also have good tensile elongations at break, and molded articles having an excellent balance of strength and flexibility can be obtained. The tensile elongation at break may be 10% or higher, or may be 15% or higher. For the purposes of the moldability, the tensile elongation at break may be 5-100%. The aforementioned tensile elongation at break refers to a value measured in accordance with ASTM-D638, specifically to a value measured under the conditions indicated below.

(Tensile elongation at break measurement method)

After molding a resin composition into sheets having a thickness of 0.40 mm, ten measurement samples are prepared by being cut out in the shape of dumbbell no. 1. Thereafter, in accordance with ASTM-D638, the tensile elongations at break of the measurement samples are measured at a pulling rate of 5 mm/min under conditions with a measurement temperature of 23 °C and a humidity of 50%, using an autoclave. The tensile elongations at break of all of the measurement samples are measured and the average value thereof is defined as the tensile elongation at break of the resin composition.

The melt flow rate (MFR) of the resin composition according to the present invention, evaluated at 200 °C and with a load of 5 kg, in accordance with the JIS K 7260 standard, is preferably 1.5 g/10 min or higher, and more preferably 2.0 g/10 min or higher. As long as the MFR (200 °C, 5 kg load) of the resin composition is 1.5 g/10 min or higher, the flowability tends to be good and the moldability tends to be better.

<Inorganic filler material containing calcium carbonate>

The resin composition according to the present invention contains 50 mass% or more, relative to the overall mass of the resin composition, of an inorganic filler containing calcium carbonate. Since the resin composition according to the present invention contains a styrene-based resin containing a diene component as a thermoplastic resin component, the moldability does not become worse, even if 50 mass% or more of an inorganic filler is contained. Additionally, molded articles having excellent tensile moduli and tensile elongations at break can be provided. The percentage of the inorganic filler material relative to the overall mass of the resin composition is 50 mass% or more, preferably 50-70 mass%, and more preferably 50-60 mass%.

The inorganic filler material contains calcium carbonate. The percentage of calcium carbonate in the inorganic filler material relative to the overall mass of the inorganic filler material is preferably 90 mass% or higher, more preferably 93-100 mass%, and even more preferably 95-100 mass%. If the percentage of calcium carbonate in the inorganic filler material is within the aforementioned range, molded articles having excellent tensile moduli and tensile elongations at break tend to be obtained.

The inorganic filler material may contain a filler material (other filler material) aside from the calcium carbonate. The other filler material may, for example, be talc, etc. The other filler material may be contained as a single type alone, or as a combination of two or more types. Additionally, the other filler material can be contained within a range of less than 10 mass% relative to the overall mass of the inorganic filler material.

In one embodiment, the inorganic filler material containing calcium carbonate according to the present invention may be a biomineral. The expression "biomineral" refers to a mineral made by an organism, examples of which include pearls, mollusk shells, egg shells, bones, crustacean exoskeletons, etc. When using a "biomineral" as the inorganic filler material according to the present invention, it is preferable to use an egg shell powder or a mollusk shell powder. Egg shell powder and mollusk shell powder are inorganic filler materials containing calcium carbonate as the main component. Additionally, egg shell powder and mollusk shell powder are preferably powders derived from food waste for the purpose of further reducing the impact on the environment. Among the above, it is more preferable to contain egg shell powder. The expression "derived from food waste" may refer to materials derived from food waste such as unsold or leftover food arising during the food distribution process or in the consumption stage, as well as processing residues created when producing food products or during the cooking process.

The egg shell powder preferably has the shells of chicken eggs as the raw material. At least 200,000 tons per year of chicken egg shells are treated as waste, and the effective use thereof is sought. Additionally, chicken egg shells generally contain 95 mass% or more of calcium carbonate. The resin composition according to the present invention preferably contains a chicken egg shell powder as the inorganic filler material containing calcium carbonate. In one embodiment, the inorganic filler material may be obtained by using only egg shell powder, or it may be a mixture of egg shell powder and commercially available calcium carbonate. In this case, "commercially available calcium carbonate" refers to raw materials that are not derived from biominerals, for example, those that are produced chemically, using limestone, etc. as the raw material. When using a mixture of egg shell powder and commercially available calcium carbonate as the inorganic filler material, the percentage of the egg shell powder in the mixture is preferably 60-100 mass%, and more preferably 70-100 mass% for the purpose of making advantageous use of natural waste materials. Additionally, the mixture may contain the aforementioned other filler material aside from calcium carbonate.

When blending an egg shell powder as the inorganic filler material, if a finer powder is used, the viscosity of the resin composition tends to rise, and there is a risk that the flowability at the time of molding will become lower. Additionally, the dispersibility of the egg shell powder in the resin composition also tends to become lower. Meanwhile, if the average grain size is too large, then a molded article provided with the desired strength and flexibility becomes difficult to obtain. Thus, in view of the above, the average grain size of the egg shell powder is preferably 3-50 μm, more preferably 3-40 μm, and even more preferably 4-30 μm. In particular, the upper limit of the average grain size of the egg shell powder is preferably 50 μm or smaller. In the case in which an egg shell powder having an average grain size larger than 50 μm is blended, the resin tends to easily break and the desired elongation becomes difficult to obtain. The average grain size of the egg shell powder refers to a value measured with a grain size distribution measurement apparatus in accordance with a "sieving method".

The specific gravity of the egg shell powder is preferably 2.0-3.0, more preferably 2.0-2.8, and particularly preferably 2.3-2.7.

The egg shell powder mentioned above can be prepared by using a conventionally known production method. That is, it can be obtained by crushing egg shells by a known method, then classifying the powder to obtain an egg shell powder having the desired average grain size. Specifically, after removing the egg shell membranes from the egg shells, the egg shells are dried. Then, the egg shells are crushed with a crushing machine or the like to obtain an egg shell powder. Then, the egg shell powder can be obtained by classification using a sieve having an appropriate mesh size.

Additionally, a commercially available product can also be used as the egg shell powder. Commercially available products include, for example, product name GT-26 manufactured by Green Techno21, product name Calhope (registered trademark) manufactured by Kewpie Egg Corporation, etc.

In the case in which the inorganic filler material according to the present invention is an egg shell powder, the egg shell powder content in the resin composition relative to the overall mass of the resin composition is 50 mass% or more, preferably 50-70 mass%, and more preferably 50-65 mass%.

<Styrene-based resin containing diene component>

The resin composition according to the present invention contains a styrene-based resin containing a diene component. By containing a styrene-based resin containing a diene component, even when blending 50 mass% or more of the aforementioned inorganic filler material, the resin composition does not become brittle and the moldability is also good. Additionally, moldability with excellent properties in terms of tensile modulus and tensile elongation at break can be obtained. In this case, the expression "containing a diene component" refers to containing a styrene-based resin that includes monomer units derived from a conjugated diene, containing conjugated diene monomers, containing a rubber polymer that is a copolymer containing conjugated diene rubber or a conjugated diene, or containing one or more of the above. Additionally, the expression "styrene-based resin" refers to containing one or more polymers including monomer units derived from an aromatic vinyl compound. The "styrene-based resin containing a diene component" according to the present invention may be constituted by a single type of polymer including monomer units derived from a conjugated diene and monomer units derived from an aromatic vinyl compound, or may be a mixture of multiple polymers as mentioned below. Hereinafter, a styrene-based resin containing a diene component may be described simply as a "styrene-based resin".

The percentage of the diene component in the resin composition relative to the overall mass of the resin composition is preferably 3-15 mass%, more preferably 3-14 mass%, and particularly preferably 4-12 mass%. As long as the percentage of the diene component in the resin composition is within the aforementioned range, the moldability tends to be good even when blending 50 mass% or more of the inorganic filler material. Additionally, the tensile moduli and the tensile elongations at break of the molded articles do not easily become lower. The percentage of the diene component in the resin composition may be a value computed from the blended amount of the styrene-based resin, or may be a value measured by the method below.

As the method for computation from the blended amount of the styrene-based resin, for example, when using a styrene-based resin in which the amount of the diene component is already known, the value can be computed by the following expression: [(diene component amount (mass%) in styrene-based resin) $\times$ (blended amount (mass%) of styrene-based resin)]/overall mass (100 mass%) of resin composition.

Methods for measuring the diene components in a resin composition include, for example, a method for measuring the diene content in a resin composition by potentiometric titration using iodine monochloride, potassium iodide, and sodium thiosulfate standard solutions, and defining this diene content to be the percentage of the diene component in the resin composition. As the specific measurement method, it is possible to employ, for example, the method described in *Shinpan Kobunshi Bunseki Handbook* [Polymer Analysis Handbook, New Edition], edited by The Japan Society for Analytical Chemistry, Polymer Analysis Research Group, Kinokuniya Shoten (1995 edition), page 659, "(3) Rubber Content".

The percentage of the diene component in the styrene-based resin according to the present invention relative to the overall mass of the styrene-based resin is preferably 5-40 mass%, more preferably 6-30 mass%, and particularly preferably 8-28 mass%. If the percentage of the diene component in the styrene-based resin is within the aforementioned ranges, the percentage of the diene component in the resin composition can be easily adjusted to the preferable ranges mentioned above. Additionally, even if the styrene-based resin content in the resin composition is decreased, the moldability does not easily become worse. Additionally, the tensile modulus and the tensile elongation at break of the obtained molded article do not easily become lower. The percentage of the diene component in the styrene-based resin can be determined by the same methods as the computation method and the measurement method of the diene component in the resin composition described above.

The percentage of the styrene-based resin containing a diene component in the resin composition relative to the overall mass of the resin composition is preferably 50 mass% or less. Additionally, 30 mass% or more of the styrene-based resin is preferably contained for the purpose of obtaining rigidity in the molded article. That is, the percentage of the styrene-based resin in the resin composition is more preferably 35-50 mass%, and even more preferably 40-50 mass%.

The styrene-based resin according to the present invention may be a mixture of multiple resins. In the case in which the styrene-based resin is a mixture of multiple resins, it may contain a polystyrene resin and a styrene-based thermoplastic elastomer.

(Polystyrene resin)

The polystyrene resin according to the present invention refers to a polymer of an aromatic vinyl compound, a copolymer of an aromatic vinyl compound and a compound copolymerizable with the aromatic vinyl compound, or a polymer obtained by polymerizing the above in the presence of a rubber polymer.

Aromatic vinyl compounds include, for example, styrene, $\alpha$-methylstyrene, p-methylstyrene, o-methylstyrene, m-methylstyrene, ethylstyrene, p-t-butylstyrene, etc. These aromatic vinyl compounds may be used as a single type alone, or as a combination of two or more types. Among these, styrene is preferably contained.

Compounds that are copolymerizable with aromatic vinyl compounds include, for example, methacrylic acid esters such as methyl methacrylate and ethyl methacrylate, unsaturated nitrile compounds such as acrylonitrile and methacrylonitrile, acid anhydrides such as maleic anhydride, and the like.

The mass percentage of the copolymerizable compound relative to the total amount (100 mass%) of the aromatic vinyl compound and the copolymerizable compound is preferably 20 mass% or less, and more preferably 15 mass% or less.

Rubber polymers include, for example, conjugated diene rubber, copolymers of conjugated dienes and aromatic vinyl compounds, ethylenepropylene copolymer-based rubber, etc. More specifically, they include polybutadiene, styrene-butadiene random copolymers, styrene-butadiene block copolymers, polymers obtained by partially or fully hydrogenating the above, etc.

The weight-average molecular weight (Mw) of the polystyrene resin is preferably 10,000-500,000, and more preferably 100,000-300,000. If the Mw of the polystyrene resin is within the aforementioned ranges, the flowability tends to be good. The Mw of the polystyrene resin refers to the value computed by GPC (gel permeation chromatography), converted for polystyrene.

The polystyrene resin may be a high-impact polystyrene (hereinafter sometimes referred to as "HIPS") or a general-purpose polystyrene (homopolystyrene, hereinafter sometimes referred to as "GPPS"). In one embodiment, the polystyrene resin preferably contains at least one resin selected from HIPS and GPPS. The polystyrene resin does include the styrene-based thermoplastic elastomer mentioned below.

In the case in which the styrene-based resin contains a polystyrene resin and a styrene-based thermoplastic elastomer, the percentage of the polystyrene resin relative to the total amount (100 mass%) of the polystyrene resin and the styrene-based thermoplastic elastomer is preferably 20-95 mass%, and more preferably 40-80 mass%. If the percentage of the polystyrene resin relative to the total amount is within the aforementioned ranges, the percentage of the diene component in the styrene-based resin can be easily adjusted. Additionally, the percentage of the polystyrene resin in the resin composition is preferably 10-40 mass%, and more preferably 20-32 mass% relative to the overall mass of the resin composition.

(Styrene-based thermoplastic elastomer)

The styrene-based thermoplastic elastomer according to the present invention refers to a block copolymer of an aromatic vinyl compound and a conjugated diene, and hydrogenates thereof. The aromatic vinyl compound may be the same as the aforementioned polystyrene resin, and is more preferably styrene.

The styrene-based thermoplastic elastomer according to the present invention includes, for example, block copolymers of styrene-butadiene (SB), styrene-isoprene (SI), styrene-butadiene-butylene (SBB), styrene-butadiene-isoprene (SBI), styrene-butadiene-styrene (SBS), styrene-butadiene-butylene-styrene (SBBS), styrene-isoprene-styrene (SIS), styrene-butadiene-isoprene-styrene (SBIS), etc., and block copolymers obtained by hydrogenating the above. These may be used as a single type alone, or by combining two or more types. Among these, the styrene-based thermoplastic elastomer preferably contains a styrene-butadiene copolymer.

The weight-average molecular weight (Mw) of the styrene-based thermoplastic elastomer is preferably 100,000-200,000, and is more preferably 120,000-180,000. If the styrene-based thermoplastic elastomer has an Mw within the aforementioned ranges, the compatibility with the polystyrene resin tends to be good. The Mw of the styrene-based thermoplastic elastomer is measured by GPC under conditions similar to those for the polystyrene resin mentioned above.

The percentage of the diene component in the styrene-based thermoplastic elastomer relative to the overall mass of the styrene-based thermoplastic elastomer is preferably 10-80 mass%, more preferably 13-70 mass%, and even more preferably 15-60 mass% for the purpose of making it easier to adjust the range of the tensile modulus to be moldable. The diene component in the styrene-based thermoplastic elastomer may be a value computed from the amount of the conjugated diene that is fed, or may be a value measured by a method mentioned above. The methods for measuring the diene component in the styrene-based thermoplastic elastomer include the same methods as the measurement methods for the diene content in the resin composition mentioned above.

In the case in which the styrene-based resin contains a polystyrene resin and a styrene-based thermoplastic elastomer, the percentage of the styrene-based thermoplastic elastomer relative to the total amount (100 mass%) of the polystyrene resin and the styrene-based thermoplastic elastomer is preferably 10-70 mass%, and more preferably 20-60 mass%. If the percentage of the styrene-based thermoplastic elastomer relative to the aforementioned total amount is within the aforementioned ranges, the percentage of the diene component in the styrene-based resin can be easily adjusted. Additionally, the percentage of the styrene-based thermoplastic elastomer in the resin composition relative to the overall mass of the resin composition is preferably 5-40 mass%, and more preferably 8-30 mass%.

In one embodiment, the styrene-based resin may be constituted by only the styrene-based thermoplastic elastomer. In the case in which the styrene-based resin is constituted by only the styrene-based thermoplastic elastomer, it is preferable to adjust the diene components in the styrene-based thermoplastic elastomer so that the amount of the diene components in the resin composition is within the range 3-15 mass%.

As described above, the resin composition according to the present invention, despite containing 50 mass% or more of an inorganic filler material relative to the overall mass of the resin composition, has a tensile elongation at break of 5% or higher, and has a tensile modulus of 1,000-3,000 MPa. Generally, when the percentage of an inorganic filler material is raised and the percentage of a resin component is further reduced, the resin easily breaks and sufficient elongation cannot be obtained. That is, the molded article becomes hard and brittle. The present inventors discovered that, by blending a styrene-based resin containing a certain amount of a diene component, sufficient elongation can be obtained even with a small amount of resin, and furthermore, the tensile modulus can be kept from becoming too high. Furthermore, it was discovered that, by combining a polystyrene resin such as GPPS or HIPS with a styrene-based thermoplastic elastomer, even if the percentage of the resin component in the resin composition is set to be 50 mass% or less, the balance between the elastic modulus and the elongation becomes better, and a molded article having a more exceptional balance of flexibility and strength can be easily obtained.

Although the resin composition according to the present invention may contain a thermoplastic resin (other thermoplastic resin) aside from the styrene-based resin, the resin composition preferably does not contain other thermoplastic resins for the purpose of obtaining a resin composition with a low resin content.

The resin composition according to the present invention may contain, as needed, other additives such as ultraviolet absorbers, photostabilizers, antioxidants, lubricants, plasticizers, colorants, antistatic agents, flame retardants, and mineral oils, and reinforcing fibers such as glass fibers, carbon fibers, and aramid fibers. These may be used as a single type alone or as a combination of two or more types.

Ultraviolet absorbers include, for example, benzotriazole-based ultraviolet absorbers such as 2-(5'-methyl-2'-hydroxyphenyl)benzotriazole, 2-(5'-t-butyl-2'-hydroxyphenyl)benzotriazole, 2-[2'-hydroxy-3',5'-bis($\alpha,\alpha$-dimethylbenzyl)phenyl]benzotriazole, 2-(3',5'-di-t-butyl-2'-hydroxyphenyl)benzotriazole, 2-(3'-t-butyl-5'-methyl-2'-hydroxyphenyl)-5-chlorobenzotriazole, 2-(3',5'-di-t-butyl-2'-hydroxyphenyl)-5-chlorobenzotriazole, 2-(3',5'-di-t-amyl-2'-hydroxyphenyl)benzotriazole, 2-[3'-(3",4",5",6"-tetrahydrophthalimidomethyl)-5'-methyl-2'-hydroxyphenyl]benzotriazole, and 2,2'-methylenebis[4-(1,1,3,3-tetramethylbutyl)-6-(2H-benzotriazole-2-yl)phenol]; oxalic acid anilide-based ultraviolet absorbers such as 2-ethoxy-2'-ethyl oxalic acid bis-anilide, 2-ethoxy-5-t-butyl-2'-ethyl oxalic acid bis-anilide, and 2-ethoxy-4'-isodecylphenyl oxalic acid bis-anilide; benzophenone-based ultraviolet absorbers such as 2-hydroxy-4-n-octoxybenzophenone, 2,4-dihydroxybenzophenone, 2-hydroxy-4-methoxybenophenone, 2-hydroxy-4-methoxy-5-sulfobenzophenone, 2,2'-dihydroxy-4-methoxybenzophenone, 2,2'-dihydroxy-4,4'-dimethoxybenzophenone, and 2-hydroxy-4-methoxy-2'-carboxybenzophenone; salicylic acid-based ultraviolet absorbers such as phenyl salicylate, p-t-butylphenyl salicylate, and p-octylphenyl salicylate; cyanoacrylate-based ultraviolet absorbers such as 2-ethylhexyl-2-cyano-3,3'-diphenyl acrylate and ethyl-2-cyano-3,3'-diphenyl acrylate; and titanium oxide-based ultraviolet stabilizers such as rutiletype titanium oxide, anatase-type titanium oxide, alumina, silica, and titanium oxide treated with a surface treatment agent such as a silane coupling agent or a titanium-based coupling agent. These may be used as one type alone or as a combination of two or more types.

Photostabilizers include, for example, bis(2,2,6,6-tetramethyl-4-piperidyl)sebacate, bis(1,2,2,6,6-pentamethyl-4-piperidyl)sebacate, dimethyl succinate/1-(2-hydroxyethyl)-4-hydroxy-2,2,6,6-tetramethylpiperidine polycondensate, poly[[6,(1,1,3,3-tetramethylbutyl)amino-1,3,5-triazine-2,4-diyl] [(2,2,6,6-tetramethyl-4-piperidyl)imino]-hexamethylene-[(2,2,6,6-tetramethyl-4-piperidyl)imino]], and 1-[2-[3-(3,5-di-t-butyl-4-hydroxyphenyl)propionyloxy]ethyl]-4-[3-(3,5-di-t-butyl-4-hydroxyphenyl)propionyloxy]-2,2,6,6-tetramethylpiperidine. These may be used as one type alone or as a combination of two or more types.

Antioxidants include, for example, phenol-based antioxidants such as triethyleneglycol-bis[3-(3-t-butyl-5-methyl-4-hydroxyphenyl)propionate], 2,4-bis(n-octylthio)-6-(4-hydroxy-3,5-di-t-butylanilino)-1,3,5-triazine, pentaerythrityltetracis[3-(3,5-di-t-butyl-4-hydroxyphenyl)propionate], octadecyl-3-(3,5-di-t-butyl-4-hydroxyphenyl)propionate, 2,2-thiobis(4-methyl-6-t-butylphenol), and 1,3,5-trimethyl-2,4,6-tris(3,5-di-t-butyl-4-hydroxybenzyl)benzene; sulfur-based antioxidants such as ditridecyl-3,3'-thiodipropionate, dilauryl-3,3'-thiodipropionate, ditetradecyl-3,3'-thiodipropionate, distearyl-3,3'-thiodipropionate, and dioctyl-3,3'-thiodipropionate; and phosphorus-based antioxidants such as trisnonylphenyl phosphite, 4,4'-butylidene-bis(3-methyl-6-t-butylphenyl-di-tridecyl)phosphite, (tridecyl)pentaerythritol diphosphite, bis(octadecyl)pentaerythritol diphosphite, bis(di-t-butylphenyl)pentaerythritol diphosphite, bis(di-t-butyl-4-methylphenyl)pentaerythritol diphosphite, dinonylphenyloctyl phosphonite, tetracis(2,4-di-t-butylphenyl) 1,4-phenylene-diphosphonite, tetracis(2,4-di-t-butylphenyl) 4,4'-biphenylene-di-phosphonite, and 10-decyloxy-9,10-dihydro-9-oxa-10-phosphaphenanthrene. These may be used as one type alone or as a combination of two or more types.

[Resin composition production method]

The resin composition according to the present invention can be produced by melt-kneading an inorganic filler material containing calcium carbonate, a styrene-based resin containing a diene component, and other components as needed. Specifically, a styrene-based resin (more preferably, a polystyrene resin and a styrene-based thermoplastic elastomer) containing a diene component and an inorganic filler material (more preferably, egg shell powder) containing calcium carbonate are each fed into a twin-screw extruder and melt-kneaded at a temperature of 200-250 °C, then extruded in the form of strands to prepare a pellet-shaped resin composition. The resin composition according to the present invention contains 50 mass% or more, relative to the overall mass of the resin composition, of the inorganic filler material containing calcium carbonate. Thus, the resin material content is low.

[Use]

As described above, the resin composition according to the present invention has good moldability despite containing 50 mass% or more of the inorganic filler material. Thus, it is suitable for use as a resin composition for injection molding. Of course, the application of the resin composition according to the present invention is not limited to use for injection molding.

[Molded article]

The molded article according to the present invention contains the aforementioned resin composition. Preferably, the molded article is obtained by injection-molding the resin composition according to the present invention. The molded article according to the present invention has excellent properties in terms of tensile modulus and tensile elongation at break. Additionally, since the percentage of resin materials in the molded article according to the present invention is 50 mass% or less, it has little impact on the environment. The molded article according to the present invention can be applied to uses such as office supplies, furniture, building materials, dishware, containers, gardening materials, and toys.

More preferable embodiments of the resin composition according to the present invention are described below.

<1> A resin composition containing an inorganic filler material containing calcium carbonate and a styrene-based resin containing a diene component, the styrene-based resin comprising a polystyrene resin and a styrene-based thermoplastic elastomer, wherein the percentage of the inorganic filler material relative to the overall mass of the resin composition is 50-60 mass%, the percentage of the styrene-based resin is 40-50 mass%, and the percentage of the diene component is 3-15 mass%, and as measured in accordance with ASTM-D638, the tensile modulus is 1,000-3,000 MPa, and the tensile elongation at break is 5% or higher.

<2> The resin composition according to <1>, wherein the inorganic filler material contains at least one biomineral-derived powder selected from an egg shell powder and a mollusk shell powder.

<3> The resin composition according to <2>, wherein an average grain size of the biomineral-derived powder is 3-50 $\mu$m.

<4> The resin composition according to any one of <1> to <3>, wherein the polystyrene resin contains at least one resin selected from among HIPS and GPPS.

<5> An injection-molded article containing the resin composition according to any one of <1> to <4>.

**EXAMPLES**

Hereinafter, the present invention will be explained in detail by presenting examples. However, the present invention is not limited by the descriptions below.

[Preparation of Inorganic Filler Material 1 containing calcium carbonate]

An egg shell powder was prepared as Inorganic Filler Material 1 containing calcium carbonate.

First, chicken egg shells were rinsed with water, then loaded into a hot-air dryer and dried. After being dried, the egg shells were loaded into a stirring separation tank, and the egg shells were stirred while being exposed to high-pressure water, thereby separating and removing the egg membranes on the inner sides of the egg shells. Then, the egg shells from which the egg membranes were separated and removed were reloaded into the hot-air dryer and dried at 90-120 °C for 6 hours. The dried egg shells were crushed using a crushing machine to obtain an egg shell powder. The specific gravity of the obtained egg shell powder, measured using a pycnometer (product name "Dry Automatic Pycnometer AccuPyc II 1340", manufactured by Shimadzu Corp.), was 2.6 g/cm$^3$. Furthermore, the obtained powder was classified to obtain Inorganic Filler Material 1 (egg shell powder) having an average grain size of 10 $\mu$m.

[Preparation of Inorganic Filler Materials 2-4 containing calcium carbonate]

Using methods similar to that for Inorganic Filler Material 1, three types of egg shell powders having different average grain sizes were prepared, and these were defined to be Inorganic Filler Materials 2-4. The average grain sizes and specific gravities of the respective inorganic filler materials are indicated in Table 1.

[Table1]

| | RAW MATERIAL | AVERAGE GRAIN SIZE ($\mu$m) | SPECIFIC GRAVITY (g/cm$^3$) |
|---|---|---|---|
| INORGANIC FILLER MATERIAL 1 | EGG SHELL POWDER | 10 | 2.6 |
| INORGANIC FILLER MATERIAL 2 | EGG SHELL POWDER | 30 | 2.4 |

(continued)

|  | RAW MATERIAL | AVERAGE GRAIN SIZE ($\mu$m) | SPECIFIC GRAVITY (g/cm$^3$) |
|---|---|---|---|
| INORGANIC FILLER MATERIAL 3 | EGG SHELL POWDER | 4 | 2.6 |
| INORGANIC FILLER MATERIAL 4 | EGG SHELL POWDER | 60 | 2.4 |

[Preparation of Polystyrene Resin 1]

A polymerization tank having an internal capacity of 200 L was filled with 70.4 kg of purified water and 300 g of calcium triphosphate, and the contents were stirred. Then, 80.0 kg of styrene and 267.2 g of benzoyl peroxide were added, the tank was sealed, and the contents were allowed to react at 100 °C for 6 hours. After the reaction ended, the reaction product was cooled, neutralized, dewatered, and dried to obtain a polystyrene homopolymer (GPPS). The Mw of the obtained GPPS, when measured under the following conditions using a GPC, was 167,000.

<GPC measurement conditions>

| | |
|---|---|
| Device: | Product name "Shodex SYSTEM-21", manufactured by Shodex Co., Ltd. |
| Column: | PLgel MIXED-B |
| Measurement temperature: | 40 °C |
| Solvent: | Tetrahydrofuran |
| Flow rate: | 1.0 mL/min |
| Detection method: | RI |
| Sample concentration: | 0.2 mass% |
| Injection amount: | 100 $\mu$L |
| Calibration line: | Standard polystyrene (manufactured by Polymer Laboratories) |

[Preparation of Polystyrene Resin 2]

A polymer raw material was obtained, using a low-cis polybutadiene rubber (product name "Diene 55AS", manufactured by Asahi Kasei Corp.) as a rubber polymer, by dissolving this rubber polymer (5.3 mass% relative to the overall mass of the polymer raw material) and styrene in ethylbenzene (5 mass% relative to the overall mass of the polymer raw material) serving as a solvent. Additionally, 0.1 parts by mass of an antioxidant (product name "Irganox (registered trademark) 1076", manufactured by Ciba-Geigy Japan Ltd.) of the rubber polymer were added. This polymer raw material was supplied at a rate of 12.5 kg/hr to a 14 L jacket-equipped reactor (R-01) provided with anchor-shaped stirring blades having a blade diameter of 0.285 m. The raw material was stirred and polymerized at a reaction temperature of 140 °C and a rotation speed of 2.17 sec$^{-1}$ to obtain a polymer solution. The polymer percentage of the obtained polymer solution was 25%. This polymer solution was fed to two serially arranged jacket-equipped plug flow-type reactors with internal capacities of 21 L. In the first plug flow-type reactor (R-02), the jacket temperature was adjusted so that the reaction temperature became 120-140 °C in the flow direction of the polymer solution. In the second plug flow-type reactor (R-03), the jacket temperature was adjusted so that the reaction temperature had a gradient of 130-160 °C in the flow direction of the polymer solution. The polymer percentage at the R-02 outlet was 50% and the polymer percentage at the R-03 outlet was 70%. In this case, the polymer percentage is a value computed by Expression (1) below.

$$\text{Polymer percentage (\%)} = [(\text{amount of polymer produced})/\{(\text{amount of monomer fed}) + (\text{amount of solvent})\}] \times 100 \quad \quad \dots (1)$$

The obtained polymer solution was heated to 230 °C, then supplied to a devolatilization tank with a vacuum level of 5 torr, and the unreacted monomers and the solvent were separated and recovered. Then, the reaction product was removed from the devolatilization tank with a gear pump, passed through a die plate to form strands, then passed through a water tank and pelletized to obtain high-impact polystyrene (HIPS). The rubber component content in the obtained HIPS was 4.8 mass%. Additionally, the Mw of the HIPS, measured under the same conditions as the GPPS, was 210,000.

[Preparation of Styrene-based Thermoplastic Elastomer 1]

A reaction vessel was loaded with 500.0 kg of cyclohexane and 75.0 g of tetrahydrofuran (THF), 1,000 mL of a cyclohexane solution containing 10 mass% n-butyl lithium was added as a polymerization initiator solution, and the reaction vessel was held at 30 °C. 20.0 kg of styrene was added and the styrene was allowed to undergo anionic polymerization. At that time, the internal temperature rose to 35 °C. After the styrene was completely consumed, 33.4 kg of 1,3-butadiene and 86.6 kg of styrene were simultaneously added, and after the styrene and the 1,3-butadiene were completely consumed, the internal temperature of the reaction system was lowered to 75 °C, and 60.0 kg of styrene were further added in a single batch to complete the polymerization. Finally, all of the polymerization-active terminals were deactivated with water to obtain a polymer solution containing a styrene-butadiene copolymer having polystyrene blocks and tapered blocks of styrene and butadiene. This polymer solution was degassed, and an extruder was used to obtain a pellet-shaped block copolymer. The diene content of the obtained styrene-butadiene copolymer, computed from the amount of monomer that was fed, was 16.7 mass%.

[Preparation of Styrene-based Thermoplastic Elastomers 2 and 3]

Styrene-butadiene copolymers were obtained by methods similar to that of the aforementioned Styrene-based Thermoplastic Elastomer 1, except that the amounts of styrene and butadiene that were fed were changed. Table 2 shows the compositions and diene amounts in the respective styrene-based thermoplastic elastomers.

[Table 2]

| | COMPOSITION | DIENE CONTENT (mass%) |
|---|---|---|
| STYRENE-BASED THERMOPLASTIC ELASTOMER 1 | STYRENE-BUTADIENE COPOLYMER | 16.7 |
| STYRENE-BASED THERMOPLASTIC ELASTOMER 2 | STYRENE-BUTADIENE COPOLYMER | 28.7 |
| STYRENE-BASED THERMOPLASTIC ELASTOMER 3 | STYRENE-BUTADIENE COPOLYMER | 60.0 |

[Example 1]

Polystyrene Resin 1 (GPPS) (20 mass% relative to the overall mass of the resin composition), Styrene-based Thermoplastic Elastomer 1 (styrene-butadiene copolymer, diene content 16.7 mass%) (30 mass% relative to the overall mass of the resin composition), and Inorganic Filler Material 1 (egg shell powder, average grain size 10 $\mu$m) (50 mass% relative to the overall mass of the resin composition) were melt-kneaded at 200 °C and 200 rpm with a discharge rate of 20 kg/h using a twin-screw extruder (product name "TEM 35-B", manufactured by Toshiba Machine Co., Ltd.), extruded in the form of strands, and pelletized. The MFR of the obtained pellets, measured under the conditions indicated below, was 4.8 g/10 min. Additionally, the obtained pellets were molded into the form of sheets having a thickness of 0.40 mm using a hot press (product name "SA-303", manufactured by Tester Sangyo Co., Ltd.), and the tensile moduli and the tensile elongations at break were evaluated by the methods indicated below. The results are shown in Table 3. The values of the pressed sheet thicknesses in Table 3 are values obtained by measuring the thicknesses of the sheet-shaped molded articles using a micrometer.

<MFR>

Measured in accordance with the JIS K 7260 standard under conditions with a temperature of 200 °C and a load of 5 kg.

<Tensile modulus measurement method>

The sheet-shaped molded articles of the resin compositions were cut into the shape of dumbbell no. 1 to prepare ten measurement samples. Then, in accordance with ASTM-D638, the tensile moduli of the measurement samples were measured, using an autoclave (product name "AGS-X", manufactured by Shimadzu Corp.), under conditions with a measurement temperature of 23 °C and a humidity of 50%, at a pulling rate of 5 mm/min. The tensile moduli of all of the measurement samples were measured, and the average values thereof were evaluated in accordance with the evaluation criteria below. A grade of B or better was considered passing.

(Evaluation criteria)

A: Those with a tensile modulus of 1,200 MPa or higher and lower than 1,800 MPa.

B: Those with a tensile modulus of 1,000 MPa or higher and lower than 1,200 MPa, or of 1,800 MPa or higher and lower than 3,000 MPa.

C: Those with a tensile modulus of lower than 1,000 MPa or of 3,000 MPa or higher.

<Tensile elongation at break measurement method>

The sheet-shaped molded articles of the resin compositions were cut into the shape of dumbbell no. 1 to prepare ten measurement samples. Then, in accordance with ASTM-D638, the tensile elongations at break of the measurement samples were measured, using an autoclave (product name "AGS-X", manufactured by Shimadzu Corp.), under conditions with a measurement temperature of 23 °C and a humidity of 50%, at a pulling rate of 5 mm/min. The tensile elongations at break of all of the measurement samples were measured, and the average values thereof were evaluated in accordance with the evaluation criteria below. A grade of B or better was considered passing.

(Evaluation criteria)

A: Those with a tensile elongation at break of 10% or higher.

B: Those with a tensile elongation at break of 5% or higher and lower than 10%.

C: Those with a tensile elongation at break lower than 5%.

<Moldability evaluation criteria>

The resin compositions were molded in the forms of ISO dumbbells, using an injection molder manufactured by The Japan Steel Works, Ltd., under conditions with a temperature of 200 °C and a mold temperature of 70 °C, and the moldabilities were evaluated in accordance with the evaluation criteria below.

A: Those that were able to be molded without problems.

B: Those that snapped at spool or runner portions, or that had soft molded bodies that bent.

[Examples 2-7 and Comparative Examples 1-4]

Resin compositions were prepared by methods similar to that of Example 1, aside from the resin compositions being composed as shown in Table 3. Additionally, pellets were prepared by methods similar to that of Example 1 and the MFRs were measured. Furthermore, sheets were molded by methods similar to that of Example 1, and the sheet thicknesses, the tensile moduli, and the tensile elongations at break were measured. The results are shown in Table 3.

[Table 3]

| | | | | EX. 1 | EX. 2 | EX. 3 | EX. 4 | EX. 5 | EX. 6 | EX. 7 | COMP. EX. 1 | COMP. EX. 2 | COMP. EX. 3 | COMP. EX. 4 |
|---|---|---|---|---|---|---|---|---|---|---|---|---|---|---|
| RESIN COMPOSITION | STYRENE-BASED POLYMER | POLYSTYRENE RESIN 1 | (mass%) | 20 | - | - | 32 | - | - | - | 24 | - | 50 | 20 |
| | | POLYSTYRENE RESIN 2 | | - | 20 | - | - | 16 | 16 | 16 | - | 16 | - | - |
| | | STYRENE-BASED THERMOPLASTIC ELASTOMER 1 | | - | - | 20 | - | - | - | - | - | - | - | - |
| | | STYRENE-BASED THERMOPLASTIC ELASTOMER 2 | | 30 | 30 | 30 | - | 24 | 24 | 24 | 36 | 24 | - | - |
| | | STYRENE-BASED THERMOPLASTIC ELASTOMER 3 | | - | - | - | 8 | - | - | - | - | - | - | 30 |
| | INORGANIC FILLER MATERIAL | INORGANIC FILLER MATERIAL 1 | | 50 | 50 | 50 | - | - | 60 | - | 40 | - | 50 | 50 |
| | | INORGANIC FILLER MATERIAL 2 | | - | - | - | 60 | 60 | - | - | - | - | - | - |
| | | INORGANIC FILLER MATERIAL 3 | | - | - | - | - | - | - | 60 | - | - | - | - |
| | | INORGANIC FILLER MATERIAL 4 | | - | - | - | - | - | - | - | - | 60 | - | - |
| | DIENE COMPONENT AMOUNT IN RESIN COMPOSITION | | (mass%) | 8.6 | 9.6 | 12 | 4.8 | 7.7 | 7.7 | 7.7 | 10 | 7.7 | 0 | 18 |
| | MFR (200 °C, 5 kg load) | | (g/10 min) | 4.8 | 3.8 | 2.2 | 4.2 | 3.2 | 3.4 | 3.2 | 5.1 | 2.8 | 4.5 | 1.8 |

(continued)

| EVALUATION RESULTS | | | EX. 1 | EX. 2 | EX. 3 | EX. 4 | EX. 5 | EX. 6 | EX. 7 | COMP. EX. 1 | COMP. EX. 2 | COMP. EX. 3 | COMP. EX. 4 |
|---|---|---|---|---|---|---|---|---|---|---|---|---|---|
| | PRESSED SHEET THICKNESS | (mm) | 0.40 | 0.51 | 0.53 | 0.37 | 0.52 | 0.43 | 0.58 | 0.42 | 0.62 | 0.52 | 0.55 |
| | MOLDABILITY | (-) | A | A | A | A | A | A | A | B | B | B | B |
| | TENSILE MODULUS | (MPa) | 1100 | 1000 | 1400 | 1500 | 1300 | 1200 | 1300 | 900 | 1900 | 5500 | 500 |
| | EVALUATION RESULT | (-) | B | B | A | A | A | A | A | C | B | C | C |
| | TENSILE ELONGATION AT BREAK | (%) | 28 | 32 | 18 | 7.7 | 15 | 21 | 25 | 37 | 3.9 | 0.7 | 21 |
| | EVALUATION RESULT | (-) | A | A | A | B | A | A | A | A | C | C | A |

As shown in Table 3, the resin compositions of Examples 1-7 satisfying the features of the present invention had good values for the tensile moduli and the tensile elongations at break, even though they contained 50 mass% or more of an inorganic filler material. Additionally, the moldabilities were also good. Meanwhile, the resin compositions of Comparative Examples 1-4 not satisfying the features of the present invention were inferior in terms of either the tensile modulus or the tensile elongation at break, and also had poor moldability. From the results above, it was found that the resin composition according to the present invention has good moldability and is able to provide molded articles having excellent tensile moduli and tensile elongations at break, even with a low styrene-based resin content.

**Claims**

1. A resin composition containing an inorganic filler containing calcium carbonate and a styrene-based resin containing a diene component, wherein

   the inorganic filler content is 50 mass% or more relative to the overall mass of the resin composition, and as measured in accordance with ASTM-D638, the tensile modulus is 1,000-3,000 MPa, and the tensile elongation at break is 5% or higher.

2. The resin composition according to claim 1, wherein the inorganic filler contains an egg shell powder.

3. The resin composition according to claim 2, wherein an average grain size of the egg shell powder is 3-50 $\mu$m.

4. The resin composition according to any one of claims 1 to 3, wherein the styrene-based resin contains a polystyrene resin and a styrene-based thermoplastic elastomer.

5. The resin composition according to claim 4, wherein the polystyrene resin contains at least one resin selected from among general-purpose polystyrene and high-impact polystyrene.

6. The resin composition according to claim 4 or 5, wherein the styrene-based thermoplastic elastomer contains a styrene-butadiene copolymer.

7. The resin composition according to any one of claims 1 to 6, wherein the diene component content relative to the overall mass of the resin composition is 3-15 mass%.

8. The resin composition according to any one of claims 1 to 7, wherein the MFR (200 °C, 5 kg load) of the resin composition is 1.5 g/10 min or higher.

9. The resin composition according to any one of claims 1 to 8, wherein the resin composition is for injection molding.

10. A molded article containing the resin composition according to any one of claims 1 to 9.

## INTERNATIONAL SEARCH REPORT

International application No.

**PCT/JP2022/013769**

### A. CLASSIFICATION OF SUBJECT MATTER

*C08F 279/02*(2006.01)i; *C08L 25/04*(2006.01)i; *C08L 25/10*(2006.01)i; *C08K 3/26*(2006.01)i
FI:  C08L25/10; C08K3/26; C08L25/04; C08F279/02

According to International Patent Classification (IPC) or to both national classification and IPC

### B. FIELDS SEARCHED

Minimum documentation searched (classification system followed by classification symbols)

C08F279/02; C08L25/04; C08L25/10; C08K3/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-189744 A (PS JAPAN CORP) 21 August 2008 (2008-08-21) | 1-10 |
| A | JP 9-136998 A (NITTO DENKO CORP) 27 May 1997 (1997-05-27) | 1-10 |
| A | JP 2003-41089 A (KURARAY CO LTD) 13 February 2003 (2003-02-13) | 1-10 |
| A | JP 50-92342 A (SHIN-ETSU POLYMER CO., LTD.) 23 July 1975 (1975-07-23) | 1-10 |
| A | JP 59-199702 A (KURARAY CO LTD) 12 November 1984 (1984-11-12) | 1-10 |
| P, X | JP 6924537 B1 (TBM CO LTD) 25 August 2021 (2021-08-25)<br>claims, examples 2-6 | 1-10 |
| P, A | JP 6933408 B1 (TBM CO LTD) 08 September 2021 (2021-09-08) | 1-10 |
| P, A | JP 6892184 B1 (TBM CO LTD) 23 June 2021 (2021-06-23) | 1-10 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/013769**

| Patent document cited in search report | | | Publication date (day/month/year) | Patent family member(s) | Publication date (day/month/year) |
|---|---|---|---|---|---|
| JP | 2008-189744 | A | 21 August 2008 | (Family: none) | |
| JP | 9-136998 | A | 27 May 1997 | (Family: none) | |
| JP | 2003-41089 | A | 13 February 2003 | (Family: none) | |
| JP | 50-92342 | A | 23 July 1975 | (Family: none) | |
| JP | 59-199702 | A | 12 November 1984 | (Family: none) | |
| JP | 6924537 | B1 | 25 August 2021 | (Family: none) | |
| JP | 6933408 | B1 | 08 September 2021 | (Family: none) | |
| JP | 6892184 | B1 | 23 June 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9267350 A
- JP 2019077148 A
- JP 2018119048 A